(19) Europäisches Patentamt
European Patent Office
Office européen des brevets

(11) Veröffentlichungsnummer: **0 004 323**
**B1**

(12) # EUROPÄISCHE PATENTSCHRIFT

(45) Veröffentlichungstag der Patentschrift: **16.09.81**

(51) Int. Cl.³: **C 07 F 9/30,** C 07 F 9/38 // C08G79/04

(21) Anmeldenummer: **79100713.1**

(22) Anmeldetag: **09.03.79**

(54) **Verfahren zur Herstellung von Alkanphosphon- und Alkan-bis-alkylphosphinsäureanhydriden.**

(30) Priorität: **17.03.78 DE 2811628**

(43) Veröffentlichungstag der Anmeldung: **03.10.79 Patentblatt 79/20**

(45) Bekanntmachung des Hinweises auf die Patenterteilung: **16.09.81 Patentblatt 81/37**

(84) Benannte Vertragsstaaten: **BE CH DE FR GB IT NL**

(56) Entgegenhaltungen:
**EP-A-0 000 024**
**EP-A-0 000 043**
**US-A-2 727 067**

**JOURNAL OF THE CHEMICAL SOCIETY, London, September 1962, Seiten 3729–3733**
**E.R. LYNCH: «9, 10-Dihydro-9-hydroxy-9-phospha-phenanthrene 9-Oxide, a New Cyclic Phosphinic Acid»**

(73) Patentinhaber: **HOECHST AKTIENGESELLSCHAFT, Postfach 80 03 20, D-6230 Frankfurt/Main 80 (DE)**

(72) Erfinder: **Kleiner, Hans-Jerg, Dr., Altkönigstrasse 11a, D-6242 Kronberg/Taunus (DE)**
Erfinder: **Dürsch, Walter, Dr., In der Braubach 4, D-6240 Königstein/Taunus (DE)**

**EP 0 004 323 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG.

# Verfahren zur Herstellung von Alkanphosphon- und Alkan-bis-alkylphosphinsäureanhydriden

Für die Herstellung von Alkanphosphonsäureanhydriden sind bereits verschiedene Verfahren bekannt. Besonders interessant sind dabei solche Verfahren, die von den Phosphonsäuren ausgehen. Es ist hierbei bekannt, Phosphonsäuren zuerst mit Phosphorpentachlorid in das Phosphonsäuredichlorid zu überführen und das anfallende Phosphonsäuredichlorid durch Erhitzen mit Phosphonsäure zum Anhydrid umzusetzen. Es wurde nun gefunden, dass man die Phosphonsäuren wie auch die Alkan-bis-alkylphosphinsäuren ohne ein weiteres Hilfsreagenz allein durch thermische Wasserabspaltung in die entsprechenden Anhydride überführen kann.

Gegenstand der Erfindung ist ein Verfahren zur Herstellung von Alkanphosphon- und Alkan-bis-alkylphosphinsäureanhydriden der allgemeinen Formel II

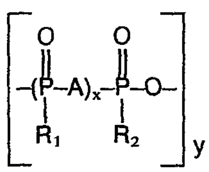

II

worin $R_1$ und $R_2$ Alkylgruppen mit 1 bis 20, vorzugsweise 1 bis 8, insbesondere 1 bis 4 C-Atomen, A eine Alkylengruppe von 1 bis 20, vorzugsweise 1 bis 8, insbesondere 1 bis 4 C-Atomen darstellen, x = 0 oder 1, und y eine ganze Zahl gleich oder grösser 1 ist, indem man Alkanphosphonsäuren bzw. Alkan-bis-alkylphosphinsäuren der allgemeinen Formel III

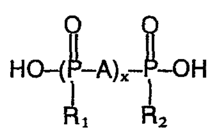

III

worin $R_1$, $R_2$ und X die oben angegebene Bedeutung haben, im Vakuum unter Wasserabspaltung auf 250–450 °C erhitzt.

Als Ausgangsverbindungen für dieses Verfahren kommen beispielsweise folgende Säuren in Frage: Methanphosphonsäure, Äthanphosphonsäure, Propanphosphonsäure, Butanphosphonsäure, Hexanphosphonsäure, Oktanphosphonsäure, Dekanphosphonsäure, Eikosanphosphonsäure, Methanpyrophosphonsäure, Propanpyrophosphonsäure, Methan-bis-(methylphosphinsäure), Methan-bis-(äthylphosphinsäure), Methan-bis-(propylphosphinsäure), Äthan-1,2-bis-(methylphosphinsäure), Propan-1,3-bis-(methylphosphinsäure), Butan-1,4-bis-(methylphosphinsäure), Hexan-1,6-bis-(methylphosphinsäure), Dekan-1,10-bis-(methylphosphinsäure).

Die Säuren werden unter Vakuum auf Temperaturen von 250 bis 450 °C, vorzugsweise 280 bis 360 °C erhitzt. Das Vakuum soll im Bereich 0,01 bis 100 Torr, bevorzugt 0,1 bis 25 Torr, besonders bevorzugt 1 bis 5 Torr liegen. Je geringer der Druck, umso niedriger kann die Reaktionstemperatur liegen. Das gebildete Wasser wird z.B. in einer dem Reaktionsgefäss nachgeschalteten Kühlfalle kondensiert. Das Verfahren kann auch kontinuierlich gestaltet werden, indem man beispielsweise die Ausgangsprodukte durch ein elektrisch geheiztes Rohr führt.

Weiterhin wurde gefunden, dass diejenigen Verbindungen unter der Formel II, bei denen X = C und $R_2$ $C_1$–$C_8$ Alkyl bedeuten, sowie die Verbindungen mit X = 1, A = $C_1$–$C_8$ Alkylen, insbesondere $C_1$–$C_4$Alkylen, und $R_1$ und $R_2$ = $C_1$–$C_4$ Alkyl, unter den angegebenen Reaktionsbedingungen destilliert werden können. Sie destillieren in dem Masse, in dem sie gebildet werden aus dem Reaktionsgefäss ab und werden auf diese Weise gereinigt.

Die so erhaltenen Anhydride liegen im allgemeinen als lineare Polymere vor, deren Polymerisationsgrad – in der Formel II mit y bezeichnet – unbekannt ist. Die Endgruppen der Polymerkette sind dabei wohl durch Wasserstoff bzw. Hydroxyl abgeschlossen. In Einzelfällen können auch ringförmige Verbindungen vorliegen. Derartige ringförmige Verbindungen liegen vermutlich auch während der oben beschriebenen Destillation vor.

Die Alkanphosphonsäure- bzw. Alkan-bisphosphinsäure-anhydride lassen sich völlig frei von den Ausgangssäuren herstellen. Bei technischen Ansätzen, die möglichst rasch verlaufen sollen, können aber geringe Mengen an den Ausgangsverbindungen in den Endprodukten verbleiben. Der Restsäuregehalt wird jedoch in der Regel 10 Gew.-% nicht überschreiten. Derartige Reaktionsprodukte sind für zahlreiche weitere Umsetzungen ohne Einschränkung brauchbar. Es kann selbstverständlich auch jeder beliebige Restsäuregehalt bei dem Verfahren eingestellt werden, wenn er erwünscht ist. Wird beispielsweise ein Anhydrid mit einem Restsäuregehalt von 30% gewünscht, so wird die Wasserabspaltung nur bis zu 70% durchgeführt.

Das erfindungsgemässe Verfahren ist überraschend, da es bei der Phenylphosphonsäure bekannt war, dass bei Temperaturen über 250 °C Zerfall in Benzol und Metaphosphorsäure eintritt (A. Michaelis et al., Chem. Ber. 7, 1070 [1874]). Ein ähnlicher Zerfall in Olefine bzw. Äther als Spaltprodukte einer Pyrolyse war daher zu erwarten gewesen. Besonders überraschend ist es, dass die Reaktionsprodukte unter den Verfahrensbedingungen destillierbar sind.

Die erfindungsgemäss herstellbaren Alkanphosphonsäure- bzw. Alkan-bis-alkylphosphinsäureanhydride stellen wertvolle Zwischenprodukte dar. Sie können beispielsweise zur Herstellung von Mitteln zur Flammhemmung, für die Metallextraktion oder den Korrosionsschutz, auch von Antistatika, dienen.

Die Herstellung von Mono-di-thiophosphinsäureanhydriden durch Erhitzen der entsprechenden freien Säuren ist bereits aus der US-PS 2 727 067

bekannt. Dort ist jedoch ausdrücklich daraufhingewiesen, dass aus Gründen der Zersetzlichkeit Temperaturen oberhalb 250 °C vermieden werden sollen. Es war deshalb überraschend zu finden, dass die Säuren gemäss der vorliegenden Erfindung auch oberhalb 250 °C hinreichend stabil sind und bei dieser Temperatur leicht in ihre Anhydride überführt werden können.

Beispiel 1

220 g Äthanphosphonsäure werden in einem Glaskolben mit einer aufgesetzten nichtverspiegelten 12 cm-Vigreux-Kolonne und einem angeschlossenen Luftkühler mit Vorlage erhitzt auf 300 bis 320 °C Innentemperatur während 12 Stunden bei einem Druck von 0,2 bis 0,5 Torr.

Bei einer Übergangstemperatur von 195 bis 200 °C destilliert das Äthanphosphonsäureanhydrid ab. In einer der Apparatur nachgeschalteten Kühlfalle sammeln sich 36 g Wasser. Man erhält 175 g Äthanphosphonsäureanhydrid. Das entspricht einer Ausbeute von 95% d.Th.

Beispiel 2

211 g Propanphosphonsäure werden in der in Beispiel 1 beschriebenen Apparatur auf eine Innentemperatur von 360 bis 420 °C erhitzt bei einem Druck von 25 Torr während 2,5 Stunden.

Bei einer Übergangstemperatur von 320 °C destilliert Propanphosphonsäureanhydrid ab.

Man erhält 170 g. Das entspricht einer Ausbeute von 95% d.Th.

Beispiel 3

138 g Butanphosphonsäure werden in der in Beispiel 1 beschriebenen Apparatur auf eine Innentemperatur von 220 °C erhitzt, die während 4 Stunden auf 280 °C gesteigert wird, bei einem Druck von 1 Torr. In einer der Apparatur nachgeschalteten Kühlfalle sammelt sich Wasser. Dann wird bei 300 bis 320 °C Innentemperatur während 7 Stunden Butanphosphonsäureanhydrid abdestilliert bei 0,4 Torr und einer Übergangstemperatur von 185 bis 200 °C.

Man erhält 110 g Butanphosphonsäureanhydrid als viskoses Öl. Das entspricht einer Ausbeute von 92% d.Th.

Beispiel 4

200 g Hexanphosphonsäure werden in der in Beispiel 1 beschriebenen Apparatur auf max. 340 °C erhitzt bei einem Druck von ca. 0,3 Torr. Während 10 Stunden destilliert bei einer Übergangstemperatur von 225 bis 250 °C Hexanphosphonsäureanhydrid ab. In einer der Apparatur nachgeschalteten Kühlfalle kondensieren ca. 22 g Wasser. Man erhält 170 g Hexanphosphonsäureanhydrid, $n_D^{24}$: 1,4670. Das entspricht einer Ausbeute von 95% d.Th.

Beispiel 5

194 g Oktanphosphonsäure werden in der in Beispiel 1 beschriebenen Apparatur auf 300 bis 360 °C Innentemperatur erhitzt bei einem Druck von ca. 1 Torr. Nach 5 Stunden wird die Innentemperatur auf 370 bis 410 °C gesteigert. Nach weiteren 3 Stunden verbleiben 172 g rohes Oktanphosphonsäureanhydrid. Anschliessend wird destilliert.

Man erhält das reine Oktanphosphonsäureanhydrid bei $Kp_{0,8}$: 300 bis 350 °C. Die Ausbeute an dem rohen Reaktionsprodukt beträgt 100% d.Th.

Beispiel 6

93 g Äthan-1,2-bis-(methylphosphinsäure) werden in der in Beispiel 1 beschriebenen Apparatur bei einem Druck von 1 Torr und 300 bis 320 °C gehalten. In einer der Apparatur nachgeschalteten Kühlfalle sammelt sich Wasser; gleichzeitig destilliert Äthan-1,2-bis-(methylphosphinsäure)-anhydrid ab.

Man erhält 87 g, $Kp_1$: 230 °C, Erstarrungspunkt: 115 bis 120 °C als glasartige Masse. Dies entspricht einer Ausbeute von 93% d.Th.

Beispiel 7

50 g Propan-1,3-bis-(methylphosphinsäure) werden in der in Beispiel 1 beschriebenen Apparatur auf 250 °C erhitzt bei einem Druck von 0,5 Torr. Die Temperatur wird allmählich auf 280 °C gesteigert. Bei einer Übergangstemperatur von ca. 200 °C destilliert Propan-1,3-bis-(methylphosphinsäure)-anhydrid ab. Das Produkt wird erneut destilliert.

Man erhält 40 g Propan-1,3-bis-(methylphosphinsäure)-anhydrid, $Kp_{0,3}$: 163 °C, Fp.: 122 bis 130 °C. Das entspricht einer Ausbeute von 86% d.Th.

Entsprechend dem $^1$H-NMR-Spektrum besitzt das Produkt die Struktur

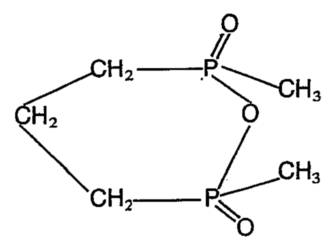

$\delta CH_3$[Doublett; $J_{CH_3,P} = 14$ Hz]: 1,75ppm*
$\delta(CH_2)_3$[Multiplett]: 1,5–2,5 ppm*
*in $CDCl_3$

Beispiel 8

80 g Butan-1,4-bis-(methylphosphinsäure) werden in der in Beispiel 1 beschriebenen Apparatur auf 290 bis 320 °C Innentemperatur erhitzt bei einem Druck von 0,5 Torr. Bei einer Übergangstemperatur von ca. 200 °C destilliert das Butan-1,4-bis-(methylphosphinsäure)-anhydrid ab. Das Produkt wird erneut destilliert.

Man erhält 65 g Butan-1,4-bis-(methylphosphinsäure)-anhydrid, $Kp_{0,3}$: 185 °C, Erstarrungspunkt: 65 °C, als glasartige Masse. Das entspricht einer Ausbeute von 88% d.Th.

**Patentansprüche**

1. Verfahren zur Herstellung von Alkanphosphon- und Alkan-bis-alkylphosphin-säureanhydriden der allgemeinen Formel II

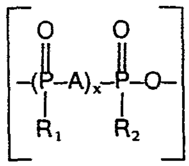

II

worin $R_1$ und $R_2$ Alkylgruppen mit 1 bis 20, vorzugsweise 1 bis 8, insbesondere 1 bis 4 C-Atomen, A eine Alkylengruppe von 1 bis 20, vorzugsweise 1 bis 6, insbesondere 1 bis 4 C-Atomen darstellen, $x = 0$ oder 1, und y eine ganze Zahl gleich oder grösser 1 ist, dadurch gekennzeichnet, dass man Alkanphosphonsäuren bzw. Alkan-bis-alkylphosphinsäuren der allgemeinen Formel III

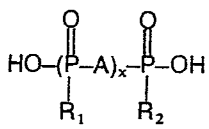

III

worin $R_1$, $R_2$ und x die oben angegebene Bedeutung haben, im Vakuum unter Wasserabspaltung auf 250 bis 450 °C erhitzt.

2. Verfahren nach Anspruch 1, dadurch gekennzeichnet, dass man solche Verbindungen der allgemeinen Formel II, bei denen $X = 0$ und $R_2$ $C_1$–$C_8$ Alkyl bedeuten, sowie solche Verbindungen der allgemeinen Formel II, bei denen $X = 1$, $A = C_1$–$C_8$ Alkylen, insbesondere $C_1$–$C_4$ Alkylen und $R_1$ und $R_2$ $C_1$–$C_4$ bedeuten, während der Wasserabspaltung abdestilliert.

**Claims**

1. A process for the manufacture of alkanephosphonic acid anhydrides and alkane-bisalkylphosphinic acid anhydrides of the formula II

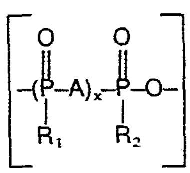

II

in which $R_1$ and $R_2$ are alkyl having from 1 to 20 preferably 1 to 8, especially 1 to 4 carbon atoms, A is alkylene having from 1 to 20 preferably 1 to 6, especially 1 to 4 carbon atoms, x is zero or 1 and y is an integer equal to or greater than 1, which is characterized by heating to 250 to 450 °C an alkane-phosphonic acid or alkane-bisalkyl-phosphinic acid of the formula III

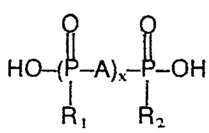

III

in which $R_1$, $R_2$ and x have the aforesaid meaning, under reduced pressure and with splitting off of water.

2. A process as claimed in claim 1 which is characterized by distilling off when the water is split off compounds of the formula II wherein x is zero and $R_2$ is $C_1$–$C_8$-alkyl and compounds of the formula II wherein x is 1, A is $C_1$–$C_8$-alkylene, especially $C_1$–$C_4$-alkylene and $R_1$ and $R_2$ are $C_1$–$C_4$-alkyl.

**Revendications**

1. Procédé de préparation d'anhydrides d'acides alcane-phosphoniques et alcane-bis-alkylphosphiniques répondant à la formule générale (II)

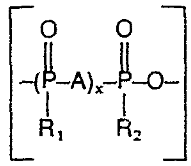

II

dans laquelle
$R_1$ et $R_2$ représentent chacun un radical alkyle contenant de 1 à 20 atomes de carbone, de préférence de 1 à 8, plus spécialement de 1 à 4,
A représente un radical alkylène contenant de 1 à 20 atomes de carbone, de préférence de 1 à 6, plus spécialement de 1 à 4,
x est égal à zéro ou à 1 et
y désigne un nombre entier égal ou supérieur à 1,
procédé caractérisé en ce qu'on chauffe à une température de 250 à 450 °C, sous pression réduite, des acides alcanephosphoniques ou alcane-bis-alkylphosphiniques répondant à la formule générale (III)

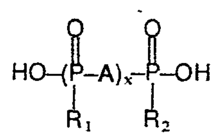

III

dans laquelle $R_1$, $R_2$ et x ont les significations indiquées ci-dessus, de manière à provoquer un enlèvement d'eau.

2. Procédé selon la revendication 1, caractérisé en ce que, au cours de la réaction d'enlèvement d'eau, on chasse par distillation les composés de formule générale (II) dans lesquels x est égal à zéro et $R_2$ représente un radical alkyle en $C_1$–$C_8$, ainsi que les composés de formule générale (II) dans lesquels x est égal à 1, A désigne un radical alkylène en $C_1$–$C_8$, plus spécialement en $C_1$–$C_4$, et $R_1$ et $R_2$ représentent chacun un radical alkyle en $C_1$–$C_4$.